# EUROPÄISCHE PATENTANMELDUNG

(11) **EP 1 856 962 A1**
(43) Veröffentlichungstag der Anmeldung: **21.11.2007**
(21) Anmeldenummer: 07009384.4
(22) Anmeldetag: 10.05.2007
(51) Int. Cl.: A01B 29/04

(54) **Landwirtschaftliche Bodenwalze mit einem Tragkörper**

(30) Priorität: 15.05.2006 DE 102006022537
(71) Anmelder: Amazonen-Werke H. Dreyer GmbH & Co. KG, 49205 Hasbergen (DE)
(72) Erfinder: Feldhaus, Werner, 27801 Dötlingen (DE); Tiessen, Reimer Uwe, 26135 Oldenberg (DE); Reinke, Wilfried, 26123 Oldenburg (DE); Steen, Rüdiger, 27798 Hude (DE)

(57) **Zusammenfassung**

Landwirtschaftliche Bodenwalze mit einem Tragkörper und mehreren von diesen nebeneinander angeordneten Gummihohlreifen, die jeweils auf einer den Tragkörper umgebenden Felge vorgesehen sind, wobei die Felgen zusammen mit dem Tragkörper eine drehbare Einheit bilden, wobei zwischen benachbarten Felgen die Felgen und die Gummihohlreifen auf Abstand zueinander haltende Distanzelemente angeordnet sind. Um eine vorteilhafte Anordnung der Gummihohlreifen mit ihren Felgen und den Distanzelementen zueinander auf dem Tragrohr mit einfachen mitteln zu erreichen, ist vorgesehen, dass die Felgen mit den Distanzelementen in axialer Richtung mittels Spannelementen miteinander verspannt sind.

## Beschreibung

Die Erfindung betrifft eine landwirtschaftliche Bodenwalze mit einem Tragkörper gemäß des Oberbegriffes des Patentanspruches 1.

Eine derartige landwirtschaftliche Bodenwalze ist beispielsweise durch die DE 40 18 366 C2 bekannt. Diese Bodenwalze weist einen Tragkörper auf. Auf diesem Tragkörper sind Felgen angeordnet, auf denen mit einem Luftdruck beaufschlagte Gummihohlreifen angeordnet sind. Die Felgen sind drehfest auf dem Tragrohr festgelegt. Die jeweils axial äußere Felge ist mittels einer Schellenverbindung drehfest am Tragrohr festgelegt. Die Festlegung erfolgt hier mit zwei das Tragrohr umgreifenden Schellenbügeln, von denen einer fest mit einer Felgenscheibe verbunden ist. Durch Verschrauben der beiden Bügel wird die Felge mit dem Drehrohr verklemmt. Die Felgen der axialen inneren Reifen sind nicht unmittelbar am Drehrohr festgelegt, sie sind vielmehr über geeignete Formstücke mit vor- und zurückspringenden Abschnitten drehfest miteinander verriegelt. Eine solche Verriegelung ist auch mit den beiden axial äußeren Felgen vorgesehen, so dass sich insgesamt eine aus einer entsprechenden Anzahl von Felgen bestehende Einheit ergibt, die über die beiden Schellenverbindungen drehfest am Drehrohr festgelegt ist.

Durch die lediglich in radialer Richtung erfolgende Verspannung der Klemmelemente mit dem Tragrohr ist nicht sichergestellt, dass die Reifen in axialer Richtung in vorgesehener Weise zueinander angeordnet sind.

Der Erfindung liegt die Aufgabe zugrunde, eine vorteilhafte Anordnung der Gummihohlreifen mit ihren Felgen und den Distanzelementen zueinander auf dem Tragrohr mit einfachen Mitteln zu erreichen.

Diese Aufgabe wird erfindungsgemäß dadurch gelöst, dass die Felgen mit den Distanzelementen in axialer Richtung mittels Spannelementen miteinander verspannt sind. Infolge dieser Maßnahme wird durch das Aufbringen von axialen Spannungskräften auf die Felgen und die Distanzelemente eine sichere axiale Verspannung der Felgen mit den Distanzelementen auf dem Tragrohr erreicht. Die Felgen und die Distanzelemente sind in definierter Weise zueinander festgelegt und entsprechend miteinander verspannt.

Um die Felgen mit den Gummihohlreifen in einfacher Weise auf dem Tragkörper anordnen zu können, ist vorgesehen, dass der dem Tragkörper zugewandte Bereich der Felgen beabstandet zu dem Tragkörper angeordnet ist.

Um eine definierte Festlegung der Felgen mit den Gummihohlreifen zu dem Tragkörper zu erreichen, ist vorgesehen, dass die Distanzelemente einen dem Außendurchmesser des Tragkörpers zumindest annähernd entsprechenden Innendurchmesser aufweisen.

Eine vorteilhafte Fixierung und Lage der Distanzelemente bezüglich des Tragkörpers wird dadurch erreicht, dass das Distanzelement an dem Tragkörper zumindest annähernd anliegt.

Um eine gute Ausrichtung und Zentrierung der Felgen auf dem Tragkörper zu den Distanzelementen und mit Hilfe der Distanzelemente zu erreichen, ist vorgesehen, dass das Distanzelement auf seiner jeweiligen axialen Außenseite, die mit den Felgen zusammenwirken, konusförmig ausgebildet ist.

Um eine exakte Zentrierung der Felgen auf dem Tragrohr durch die Distanzelemente zu gewährleisten, ist vorgesehen, dass der mit den Felgen zusammenwirkende Bereich der Distanzelemente eine an die äußere Innenkontur der Felgen angepasste Form aufweist.

Um eine drehfeste Anordnung der Felgen mit den Gummihohlreifen auf dem Tragkörper zu erreichen, ist vorgesehen, dass auf dem Tragkörper zumindest im Bereich der Distanzelemente zumindest eine sich in axialer Richtung erstreckende und aus dem Tragkörper herausragende Erhebung angeordnet ist.

Eine einfache Ausgestaltung der Erhebung ergibt sich dadurch, dass die Erhebung im Querschnitt U-förmig oder rohrförmig ausgebildet ist.

Um die Gummihohlreifen, die über ein Ventil mit Luftdruck beaufschlagbar sind, in einfacher Weise mit einem Luftdruck beaufschlagen zu können, ist vorgesehen, dass der jeweilige Gummihohlreifen über zu einer Stirnseite der Walze geführtes und mit einem Ventil verschlossene Leitung mit Luftdruck beaufschlagbar ist, dass die jeweilige Leitung durch die Erhebungen zur Stirnseite geführt ist.

Um den Gummihohlreifen eine gewünschte Federeigenschaft und Tragfähigkeit, ohne sie unbedingt mit einem Luftdruck zu beaufschlagen zu müssen, geben zu können, ist vorgesehen, dass die Gummihohlreifen mit einem dämpfenden Medium ausgeschäumt sind.

Dieses Medium kann z. B. ein spezieller auf diese Bedürfnisse abgestimmter Schaum sein.

Damit die Distanzelemente auf das Tragrohr, auf dem Erhebungen angeordnet sind, anordnen zu können, ist vorgesehen, dass die Distanzelemente den Erhebungen entsprechende Aussparungen aufweisen.

Eine einfache Ausgestaltung der Spannelemente lässt sich dadurch erreichen, dass die Spannelemente als stirnseitig an dem Tragkörper angeordnete axial, gegenüber dem Tragkörper verstellbare kreisförmige Ringe ausgebildet sind.

Um einen einfachen Zugang zu den Ventilen zu erreichen, ist vorgesehen, dass in den Ringen Öffnungen für den Zugang zu den Ventilen angeordnet sind.

Eine einfache Ausgestaltung des Tragkörpers ergibt sich dadurch, dass der Tragkörper als Rohr ausgebildet ist. Hierbei kann das Rohr einen runden, quadratischen oder polygonen Querschnitt aufweisen.

Das Distanzelement kann an der Felge angeordnet sein. Hierbei kann das Distanzelement Bestandteil der Felge oder in einteiliger Weise an die Felge angeformt sein.

Das Distanzelement kann aus Metall hergestellt sein.

In einigen Einsatzfällen, ist es sinnvoll, dass das Distanzelement aus Kunststoff oder Gummi oder aus einem Verbundwerkstoff hergestellt ist.

In einer Ausführungsform ist vorgesehen, dass,die Distanzelemente keilförmig unter die Felgen schiebbar sind. Hierdurch entfällt ein zusätzlicher Tragkörper auf dem die Felgen und Distanzelemente angeordnet sind. Durch die vor beanspruchte Maßnahme wird der Tragkörper durch die miteinander in axialer Richtung zueinander verspannten Felgen und Distanzelemente gebildet.

Um die Distanzelemente zusätzlich in radialer Richtung auf dem Tragkörper festzulegen, ist vorgesehen, dass die Distanzelemente durch das axiale Verspannen mit den Felgen in radialer Richtung gegen den Tragkörper verspannt sind. Hierbei können die Distanzelemente keilförmig unter die Felgen verschoben werden und hierdurch sich gegen den Tragkörper verspannen. Um dieses Verspannen zu erleichtern, ist vorgesehen, dass die Distanzelemente an ihren äußeren den Felgen zugewandten Enden mehrere in axialer Richtung weisende Schlitze aufweisen.

Um die Verfestigungsarbeit der Bodenwalze an unterschiedliche Bedingungen anpassen zu können, ist vorgesehen, dass der Hohlraum des Tragkörpers zumindest teilweise mit einem die Walze ballastierenden Material befüllbar ist.

Wenn die Bodenwalze gleichzeitig als Fahrwerk für eine landwirtschaftliche Maschine vorgesehen ist, ist vorgesehen, dass in dem Hohlraum des Tragkörpers zumindest ein Bremselement angeordnet ist.

Um die Notlaufeigenschaft der Walze zu verbessern, ist vorgesehen, dass das Distanzelement in dem Bereich zwischen zwei benachbarten Gummihohlreifen einen größeren Durchmesser als den Felgendurchmesser und kleineren Durchmesser als den Reifendurchmesser aufweist. Infolge dieser Maßnahme dient das Distanzelement als Notlaufelement, wenn die Gummihohlreifen beschädigt sind, der vorgesehene Luftdruck oder sonstige Stützelemente in den Gummihohlreifen ausfallen.

Zur Erreichung besonders guter Notlaufeigenschaften ist vorgesehen, dass der Durchmesser des Distanzelementes in dem Bereich zwischen zwei benachbarten Gummihohlreifen um den Betrag zwischen einem viertel und der Hälfte der Differenz der Durchmesser von Reifen- und Felgendurchmesser größer ist als der Felgendurchmesser oder kleiner ist als der Reifendurchmesser..

Weitere Einzelheiten der Erfindung sind der Beispielsbeschreibung und den Zeichnungen zu entnehmen. Hierbei zeigen
- Fig. 1: die Bodenwalze in der Vorderansicht,
- Fig. 2: die Bodenwalze in Seitenansicht,
- Fig. 3: die Bodenwalze im Schnitt III - III,
- Fig. 4: die Bodenwalze im Schnitt III - III und in Explosionsdarstellung,
- Fig. 5: den mittleren Gummihohlreifen im Schnitt III - III,
- Fig. 6: das Distanzelement in perspektivischer Darstellung,
- Fig. 7: die Anordnung der Reifenelemente zueinander mit der Anordnung der Luftleitungen ohne Tragrohr und ohne Distanzelementen,
- Fig. 8: die Reifenwalze gemäß Fig. 7 in Seitenansicht,
- Fig. 9: die Anordnung des Ventils in der Ansicht IX - IX und im vergrößertem Maßstab
- Fig. 10: das Detail X in vergrößerter Darstellung gemäß Fig. 7,
- Fig. 11: eine weitere Bodenwalze entsprechend Schnitt III - III,
- Fig. 12: die Bodenwalze gemäß Fig. 11 entsprechend Schnitt III - III und in Explosionsdarstellung,
- Fig. 13: das Distanzelement in perspektivischer Darstellung,
- Fig. 14: das Distanzelement entsprechend Schnitt III - III,
- Fig. 15: das Distanzelement in der Seitenansicht,
- Fig. 16: eine weitere Bodenwalze entsprechend Schnitt III - III,
- Fig. 17: die Bodenwalze gemäß Fig. 11 entsprechend Schnitt III - III und in Explosionsdarstellung,
- Fig. 18: das Reifenelement mit Felge und Distanzelement in perspektivischer Darstellung,
- Fig. 19: das Reifenelement mit Felge und Distanzelement in der Ansicht XIX - XIX und
- Fig. 20: das Reifenelement mit Felge gemäß Fig. 18 und 19 in Seitenansicht.

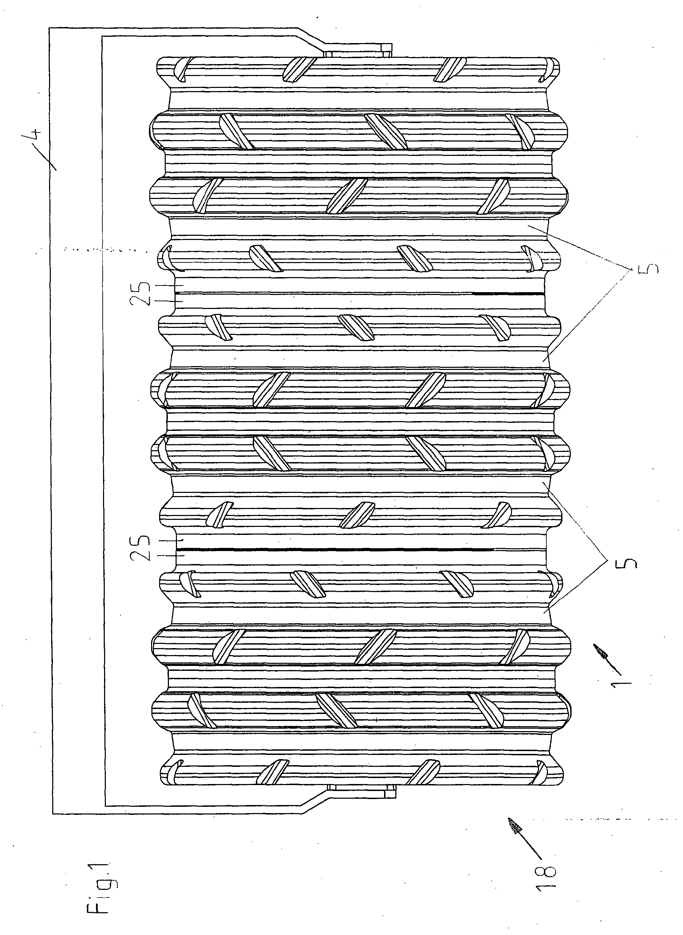

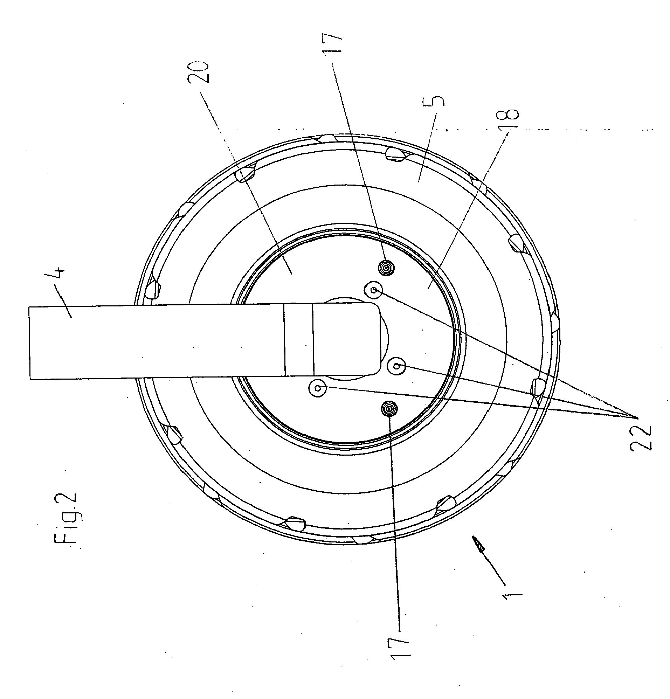

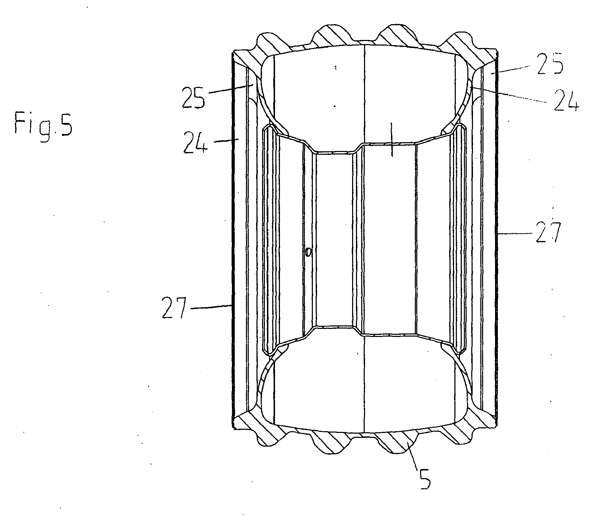

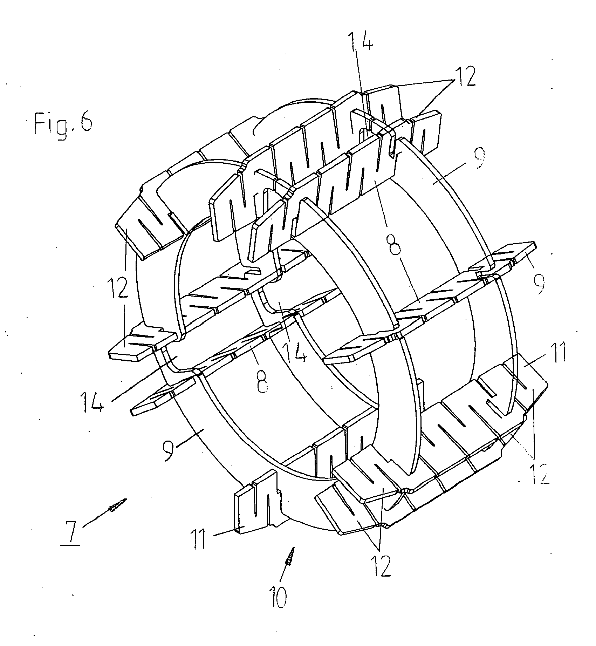

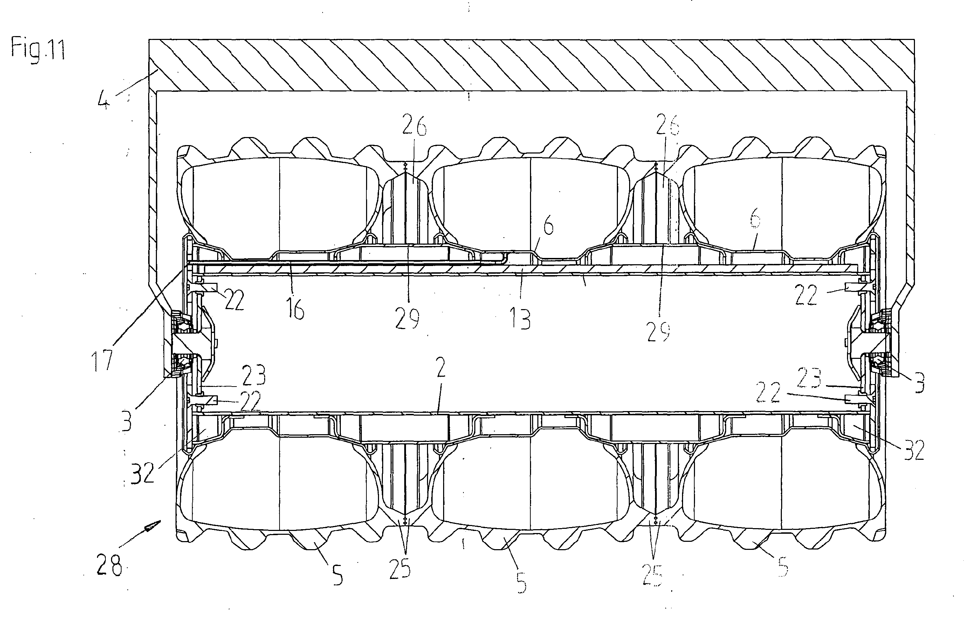

Die landwirtschaftliche Bodenwalze 1 gemäß den Fig. 1 bis 10 weist einen Tragkörper 2 auf, der mittels Lager 3 an einem Tragrahmen 4 frei drehbar gelagert ist. Auf dem Tragkörper 2, der aus einem rohrförmigen Stahlkörper besteht, sind drei Gummihohlreifen 5 nebeneinander angeordnet. Die Gummihohlreifen 5 sind auf einer Felge 6 angeordnet. Die Felgen 6 sind auf den Tragkörper 1 aufgeschoben, so dass sie den Tragkörper 2 umgeben. Die Felgen 5 bilden zusammen mit den Gummihohlreifen 5 und dem als Tragrohr 2 ausgebildeten Tragkörper eine drehbare Einheit. Zwischen dem einander benachbarten Felgen 6 der Gummihohlreifen 5 sind die Gummihohlreifen 5 und die Felgen 6 auf Abstand zueinander haltende Distanzelemente 7 angeordnet. Die Distanzelemente 7 und die Felgen 6 mit den Gummihohlreifen 5 werden abwechselnd auf den als Tragrohr ausgebildeten Tragkörper 2 aufgeschoben.

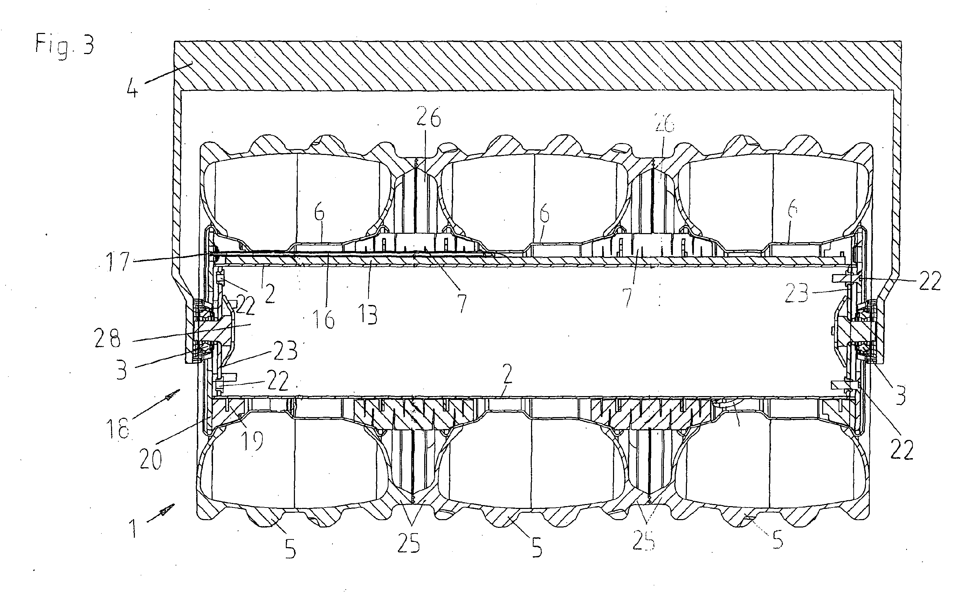

Damit die Felgen 6 mit den Gummihohlreifen 5 leicht auf den Tragkörper 2 aufgeschoben werden, weisen die Felgen 6 in ihrem inneren Bereich einen größeren Innendurchmesser als der Außendurchmesser des Tragkörpers 2 auf. Somit ist der dem Tragkörper 2 zugewandte Bereich der Felgen 6 beabstandet zu dem Tragkörper 2 angeordnet. Die Distanzelemente 7 weisen einen dem Außendurchmesser des Tragkörpers 2 in etwa entsprechenden Innendurchmesser auf. Die Distanzelemente 7 bestehen aus plattenförmigen Elementen 8, die durch ringförmige Halter 9 zu einem käfigartigen Gebilde 10 miteinander verbunden sind. Der Hüllkörper der Distanzelemente 7 weist auf seiner jeweiligen axialen Außenseite 11, die mit den Felgen 6 zusammenwirkt, eine konusförmige Form 12 auf. Hierbei ist der mit den Felgen 6 zusammenwirkende Bereich der Distanzelemente 7 mit an einer an die äußere Außenkontur der Felgen 6 angepasste Form ausgebildet, wie die Fig. 3 bis 6 zeigen.

Die Distanzelemente 7 sind also keilförmig unter die Felgen verschiebbar, um die Felgen 6 mit dem Tragkörper 2 verspannen zu können.

Auf dem Tragkörper 2 sind mehrere, im Ausführungsbeispiel drei sich in axialer Richtung des Tragkörpers 2 erstreckende und aus dem Tragkörper 2 herausragende Erhebungen 13 angeordnet. Diese Erhebung 13 kann im Querschnitt U-förmig, rohrförmig oder flach ausgebildet sein. Im Ausführungsbeispiel ist diese Erhebung 13 als auf dem Tragkörper 2 aufgeschweißtes Flacheisen ausgebildet.

Die Halteringe 9 der Distanzelemente 7 weisen an den Erhebungen 13 angepasste bzw. den Erhebungen 13 entsprechende Aussparungen 14 auf. Diese Aussparungen 14 sind jedoch in radialer Richtung größer als die Erstreckung der Erhebung 13 ausgebildet, um, wie noch weiter erläutert wird, durch diesen vergrößerten Aussparungsbereich 15 oberhalb der Erhebungen 13 die zum Befüllen der Gummihohlreifen 5 erforderlichen Luftleitungen 16 nach außen führen zu können.

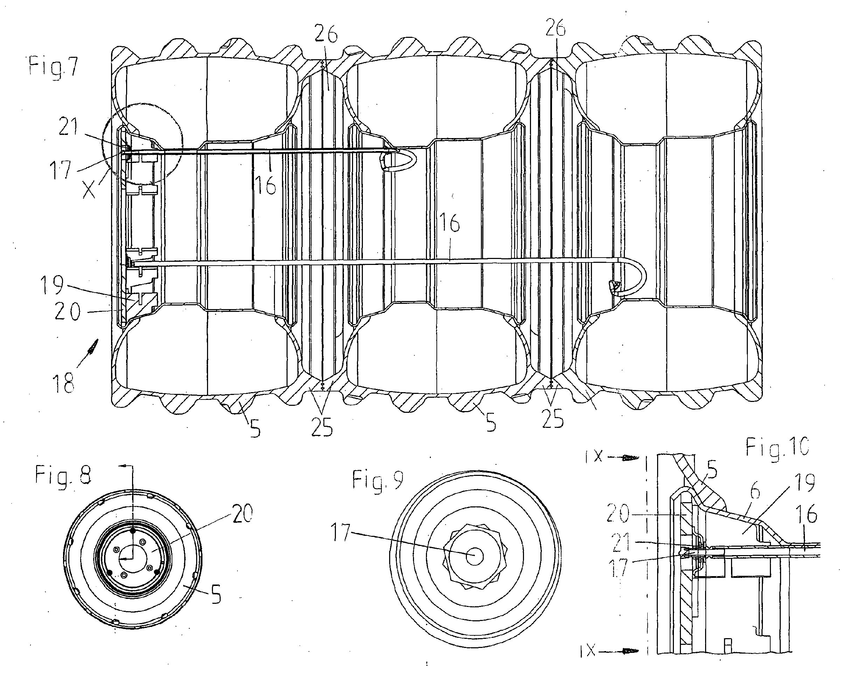

Jedem Gummihohlreifen 5 ist ein über eine Luftleitung 16 verbundenes Ventil 17 zugeordnet, um den jeweiligen Gummihohlreifen 5 mit dem gewünschten Luftdruck beaufschlagen zu können. An jedem Gummihohlreifen 5 bzw. Felge 6 wird eine Luftleitung 16 angeschlossen, die nach außen zur Stirnseite 18 der Walze 1 zu dem stirnseitigen Distanzelement 19 geführt ist und deren äußeres Ende mit dem Ventil 17 versehen ist. Wie die Fig. 7, 9 und 10 zeigen, ist das Ventil 17 bis zu einer in der stirnseitigen Spannplatte 20 des stirnseitigen Distanzelementes 19 angeordneten Öffnung 21 geführt und dort beispielsweise mit einer Schraubverbindung 22 befestigt. Zusätzlich kann die Öffnung 21 zum Schutz des Ventils 17 mit einer nicht dargestellten Verschlusskappe abgedeckt sein.

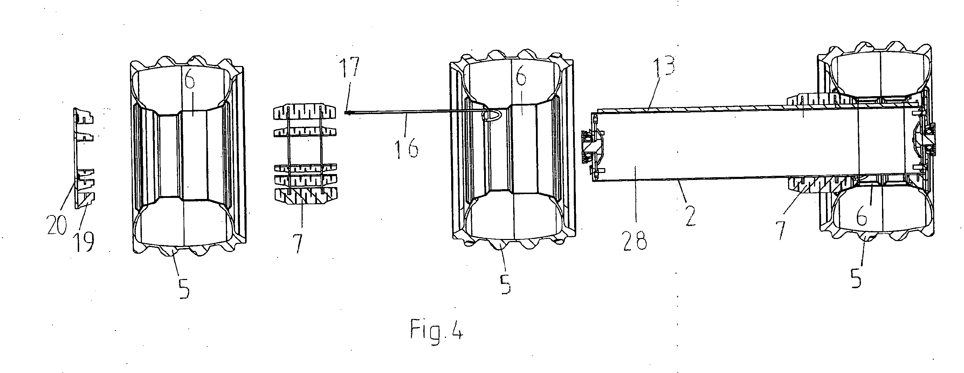

Wenn die Gummihohlreifen 5 abwechselnd mit den Distanzelementen 7 auf das Tragrohr 2 entsprechend den Fig. 3 und 4 aufgeschoben sind, wird von beiden Stirnseiten 18 der Bodenwalze 1 das stirnseitige Distanzelement 19 mit der Stirnplatte 20 mit dem Tragkörper 2 durch beispielsweise als Schrauben 22 ausgebildeten Spannmitteln verschraubt. Hierzu sind im stirnseitigen Bereich des Tragkörpers 2 entsprechende Aufnahmenelemente 23 für die Verschraubung und Verspannung angeordnet. Mittels der Schrauben 23 und der stirnseitigen Distanzelemente 19 werden die Felgen 6 mit den Distanzelementen 7 in axialer Richtung miteinander verspannt. Die Schrauben 22 bilden die Spannelemente zum Verspannen der Distanzelemente 19 mit den Felgen 6. Durch das axiale Verspannen schieben sich die konusförmigen Bereiche 12 der Distanzelemente 7 zwischen die Felgen 6 und den Tragkörper 2 hinein. Durch die entsprechende konische Ausgestaltung der Felgen 6 und der Distanzelemente 7 zueinander, und dem Verspannen gegeneinander werden die Distanzelemente 7 gegen die Felgen 6 und dem Tragkörper 2 gedrückt, so dass die Distanzelemente 7 sowohl an dem Tragkörper 2 wie auch an der Felge 6 zur Anlage kommen. Hierdurch erhalten die Felgen 6 einen festen Sitz auf dem Tragkörper 2.

Durch die auf dem Tragkörper 2 angebrachte Erhebung 13 in Verbindung mit den Aussparungen 14 in den Halteringen 9 der Distanzelemente 7 wird eine Art formschlüssige Verdrehsicherung der Distanzelemente 7 und der Felgen 6 mit dem Gummihohlreifen 5 auf dem Tragkörper 2 gewährleistet.

Die Spannelemente 22 drücke die stirnseitig an den Tragkörper 2 angeordneten und axial gegenüber dem Tragkörper 2 verstellbaren kreisförmige Ringe 20 mit dem Distanzelementen 19 gegen die Felgen 6 ausgebildet, um so die Felgen 6 mit den Distanzelementen 7 auf dem Tragkörper 2 zu verspannen.

Die Distanzelemente 7 sind mit den Felgen 6 derartig aufeinander abgestimmt, dass die Gummihohlreifen 5 auf den Felgen 6 in dem gewünschten Abstand zueinander auf dem Tragkörper 2 zu Bildung der Bodenwalze angeordnet sind.

Im Ausführungsbeispiel sind auf den einander benachbarten Seitenflächen 24 der Gummihohlreifen 5 den Gummihohlreifen 5 verbreiternde Zwischenringe 25 angeordnet, um den Zwischenraum 26 zwischen benachbarten Gummihohlreifen 5 im radialen-äußeren Bereich zu verschließen. Hierbei sind dann die Distanzringe 7 derartig in Verbindung mit den Felgen 6 ausgelegt, dass die Außenflächen 27 der an den Gummihohlreifen 5 angeordneten Zwischenringe 25 in gewünschter Weise ausreichend dicht einander anliegen, damit sie den Hohlraum 26 zwischen den benachbarten Gummihohlreifen 5 verschließen, so dass keine Erde oder sonstige Gegenstände in diesen Bereich 26 eindringen können.

In dem Hohlraum 26 des Tragkörpers 2 kann in nicht dargestellter Weise ein Bremselement angeordnet sein, um die die Bodenwalze 1, insbesondere wenn sie als Fahrwerk für eine gezogene landwirtschaftliche Arbeitsmaschine oder Verteilmaschine dient, gegenüber dem Tragrahmen 4 gebremst werden kann.

Des Weiteren kann in nicht dargestellter Weise der Hohlraum 26 des Tragkörpers 2 zumindest teilweise mit einem die Walze 1 ballastierenden Material befüllt werden, so dass die Verdichtungsarbeit der Bodenwalze 1 an die herrschenden Bedingungen in gewünschter Weise angepasst werden kann.

Anstelle der Luftdruckbeaufschlagung können die Gummihohlreifen 5 mit einem dämpfenden Material befüllt oder ausgeschäumt sein.

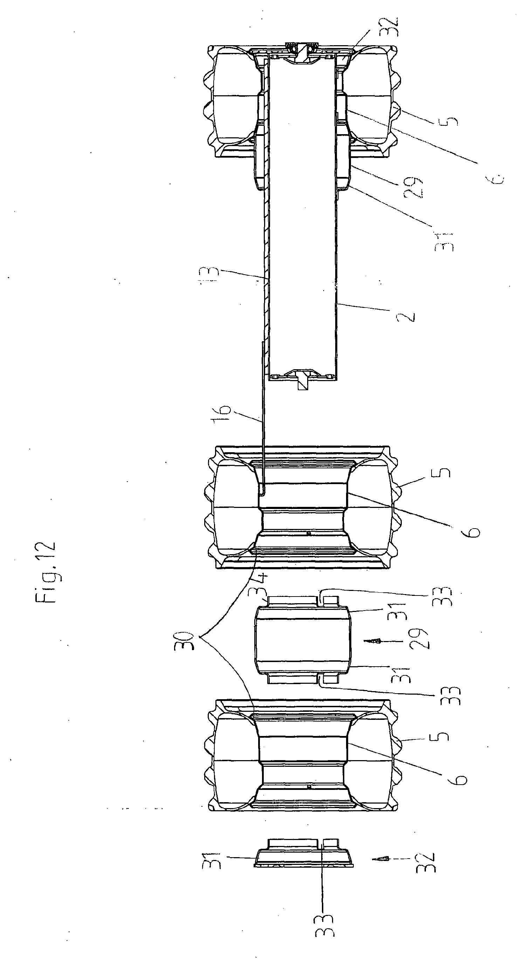

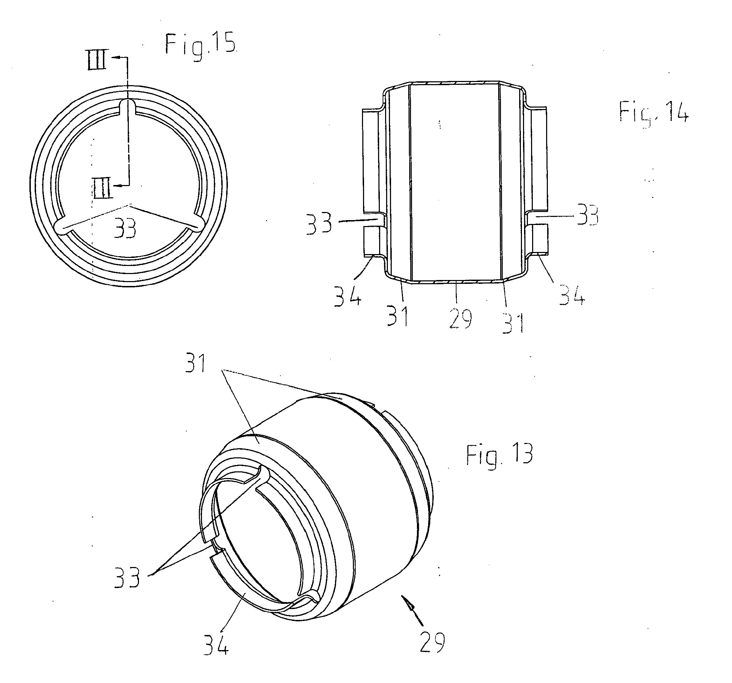

Die Bodenwalze 28 gemäß den Fig. 11 bis 15 unterscheidet: sich von der Bodenwalze 1 gemäß den Fig. 1 bis 10 durch eine andere Ausgestaltung der Distanzelemente 29. Die Distanzelemente gemäß den Fig. 11 bis 15 sind als geprägter zylinderförmiger Metallkörper ausgebildet. Die Distanzelemente 29 weisen wiederum in ihrem Außenbereich eine an den Felgen-Innenform 30 angepasste konusförmigen Ansatz 31 auf. Die Distanzelemente 29 werden mit den Felgen 6 und den Gummihohlreifen 5 über den äußeren Distanzring 32 miteinander auf dem Tragkörper 2 verspannt. Der Distanzring 32 weist ebenfalls den Ansatz 31 auf. Die Distanzelemente 29 und 32 weisen an ihren äußeren den Tragkörper 2 zugewandten Enden mehrere in axialer Richtung weisende Schlitze 33 auf, damit die Distanzelemente 29 beim axialen Verspannen mit den Felgen 6 sich mit ihren äußeren Enden 34 auf dem Tragkörper 2 festklemmen können. Gleichzeitig dienen diese Schlitze 33 als Aussparungen für die auf dem Tragkörper 2 zur verdrehsicheren Anordnung der auf dem Tragkörper 2 angeordneten Erhebungen 13.

Die Distanzelemente können anstelle aus Metall, können auch aus Kunststoff, Gummi oder einem Verbundstoff hergestellt sein.

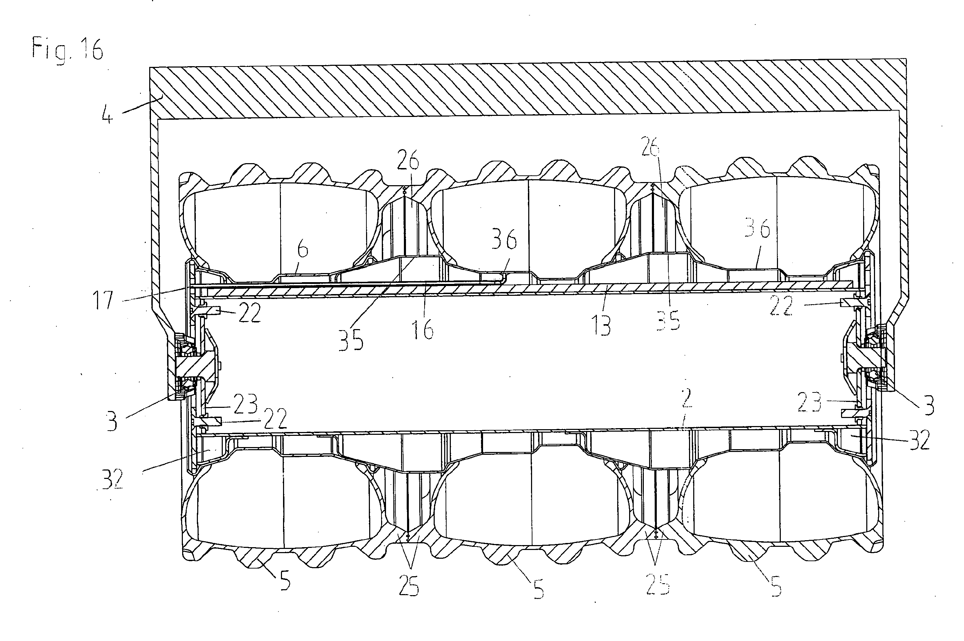

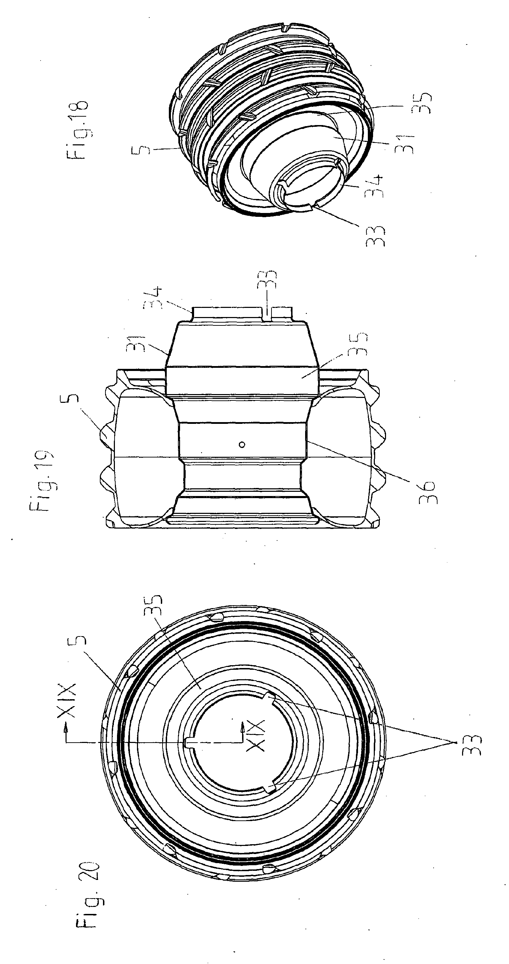

Die Distanzelemente 35 gemäß den Fig. 16 bis 20 unterscheiden sich von den Distanzelementen 7 und 29 gemäß den vorhergehenden Figuren dadurch, dass sie direkt einseitig an einer Felge 36 angeordnet und mit dieser verbunden sind, wie insbesondere die Fig. 19 zeigt. Die Distanzelemente 35, die an den Felgen 36 einstückig angeordnet oder dort angeschweißt sind, bestehen aus einem profilierten Metallkörper. Sie weisen auf der der Felge 36, an welcher sie angeordnet sind, abgewandten Seite 37 eine konusförmige an die Felgen-Innenform 30 der benachbarten Felge 36 angepasste Form auf und sind in ihrem äußeren Bereich konusförmig ausgebildet. Weiterhin weisen die Distanzelemente 35 auf dem axial äußeren Ende 38 eine an den Durchmesser des Tragkörpers 2 angepasste Öffnung auf. In diesen Bereichen sind Aussparungen 33 angeordnet, die größer als die Erhebungen 13, die auf dem Tragkörper 2 angeordnet sind, sind.

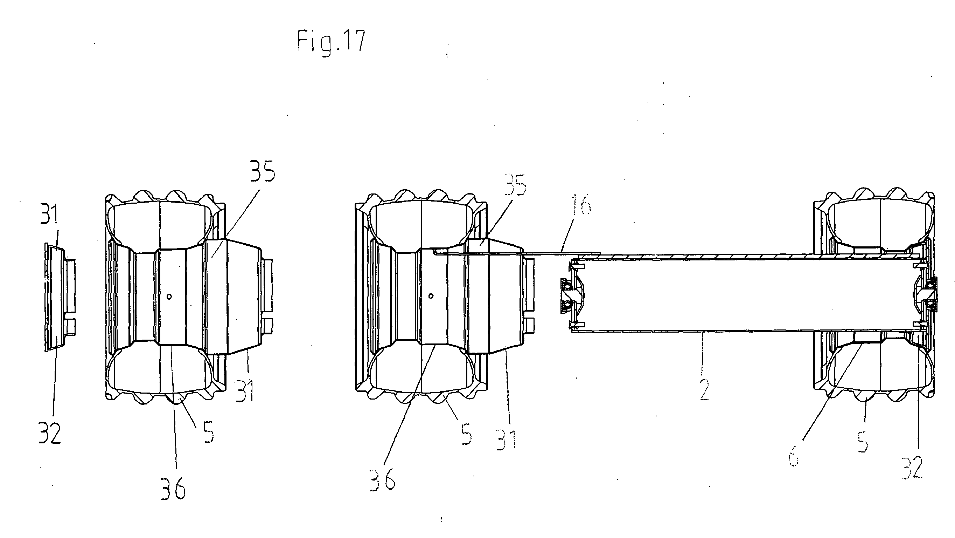

Die Distanzelemente 35 werden mit den Felgen 36, wie in Fig. 17 dargestellt ist, auf dem Tragkörper 2 aufgefädelt und entsprechend der Darstellung in Fig. 16 durch das äußere Distanzelement 32, welches einen Stirnring aufweist, mit den als Schrauben 22 ausgebildeten Spannelementen in axialer Richtung verspannt. Hierbei werden die Felgen 36 mit Distanzelementen 35 verspannt und die axial äußeren Teile 34 können sich an dem Tragkörper 2 anlegen.

## Patentansprüche

1. Landwirtschaftliche Bodenwalze mit einem Tragkörper und mehreren von diesen nebeneinander angeordneten Gummihohlreifen, die jeweils auf einer den Tragkörper umgebenden Felge vorgesehen sind, wobei die Felgen zusammen mit dem Tragkörper eine drehbare Einheit bilden, wobei zwischen benachbarten Felgen die Felgen und die Gummihohlreifen auf Abstand zueinander haltende Distanzelemente angeordnet sind, **dadurch gekennzeichnet, dass** die Felgen (6, 36) mit den Distanzelementen (7, 29, 35) in axialer Richtung mittels Spannelementen (22) miteinander verspannt sind.

2. Bodenwalze nach Anspruch 1, **dadurch gekennzeichnet, dass** der dem Tragkörper (2) zugewandte Bereich der Felgen (6, 36) beabstandet zu dem Tragkörper (2) angeordnet ist.

3. Bodenwalze nach einem oder mehreren der vorstehenden Ansprüche, **dadurch gekennzeichnet, dass** die Distanzelemente (7, 29, 35) einen dem Außendurchmesser des Tragkörpers (2) zumindest annähernd entsprechenden Innendurchmesser aufweisen.

4. Bodenwalze nach einem oder mehreren der vorstehenden Ansprüche, **dadurch gekennzeichnet, dass** das Distanzelement (7, 29, 35) an dem Tragkörper (2) zumindest annähernd anliegt.

5. Bodenwalze nach einem oder mehreren der vorstehenden Ansprüche, **dadurch gekennzeichnet, dass** das Distanzelement (7, 29, 35) auf seiner jeweiligen axialen Außenseite, die mit den Felgen (6, 36) zusammenwirken, konusförmig ausgebildet ist.

6. Bodenwalze nach einem oder mehreren der vorstehenden Ansprüche, **dadurch gekennzeichnet, dass** der mit den Felgen (6, 36) zusammenwirkende Bereich der Distanzelemente (7, 29, 35) eine an die äußere Innenkontur der Felgen (6, 36) angepasste Form aufweist.

7. Bodenwalze nach einem oder mehreren der vorstehenden Ansprüche, **dadurch gekennzeichnet, dass** auf dem Tragkörper (2) zumindest im Bereich der Distanzelemente (7, 29, 35) zumindest eine sich in axialer Richtung erstreckende und aus dem Tragkörper (2) herausragende Erhebung (13) angeordnet ist.

8. Bodenwalze nach einem oder mehreren der vorstehenden Ansprüche, **dadurch gekennzeichnet, dass** die Erhebung (13) im Querschnitt U-förmig oder rohrförmig ausgebildet ist.

9. Bodenwalze nach einem oder mehreren der vorstehenden Ansprüche, wobei die Gummihohlreifen über ein Ventil mit Luftdruck beaufschlagbar sind, **dadurch gekennzeichnet, dass** der jeweilige Gummihohlreifen (5) über zu einer Stirnseite der Walze (1, 28) geführtes und mit einem Ventil (17) verschlossene Leitung (16) mit Luftdruck beaufschlagbar ist, dass die jeweilige Leitung durch die Erhebungen (13) zur Stirnseite geführt ist.

10. Bodenwalze nach einem oder mehreren der vorstehenden Ansprüche 1 bis 8, **dadurch gekennzeichnet, dass** die Gummihohlreifen (5) mit einem dämpfenden Medium befüllt und/oder ausgeschäumt sind.

11. Bodenwälze nach Anspruch 7, **dadurch gekennzeichnet, dass** die Distanzelemente (7, 29, 35) den Erhebungen (13) entsprechende Aussparungen (14, 33) aufweisen.

12. Bodenwalze nach einem oder mehreren der vorstehenden Ansprüche, **dadurch gekennzeichnet, dass** die Spannelemente (22) als stirnseitig an dem Tragkörper (2) angeordnete axial gegenüber dem Tragkörper (2) verstellbare kreisförmige Ringe ausgebildet sind

13. Bodenwalze nach Anspruch 12, **dadurch gekennzeichnet, dass** in den Ringen Öffnungen für den Zugang zu den Ventilen (17) angeordnet sind.

14. Bodenwalze nach einem oder mehreren der vorstehenden Ansprüche, **dadurch gekennzeichnet, dass** der Tragkörper (2) als Rohr ausgebildet ist.

15. Bodenwalze nach Anspruch 13, **dadurch gekennzeichnet, dass** das Rohr (2) in einem runden, quadratischen oder polygonen Querschnitt aufweist.

16. Bodenwalze nach einem oder mehreren der vorstehenden Ansprüche, **dadurch gekennzeichnet, dass** das Distanzelement (35) an der Felge (36) angeordnet ist.

17. Bodenwalze nach Anspruch 16, **dadurch gekennzeichnet, dass** das Distanzelement (35) Bestandteil der Felge (36) ist.

18. Bodenwalze nach Anspruch 16, **dadurch gekennzeichnet, dass** das Distanzelement (35) in einteiliger Weise an die Felge (36) angeformt ist.

19. Bodenwalze nach einem oder mehreren der vorstehenden Ansprüche, **dadurch gekennzeichnet, dass** das Distanzelement (7, 29, 35) aus Metall hergestellt ist.

20. Bodenwalze nach einem oder mehreren der Ansprüche 1-16, **dadurch gekennzeichnet, dass** das Distanzelement (29) aus Kunststoff oder Gummi hergestellt ist.

21. Bodenwalze nach einem oder mehreren der Ansprüche 1-16, **dadurch gekennzeichnet, dass** das Distanzelement (29) aus einem Verbundwerkstoff hergestellt ist.

22. Bodenwalze nach einem oder mehreren der vorstehenden Ansprüche, **dadurch gekennzeichnet, dass** der Tragkörper (2) von dem miteinander axial verspannten Felgen (6, 36) und Distanzelementen (7, 29, 35) gebildet wird.

23. Bodenwalze nach einem oder mehreren der vorstehenden Ansprüche, **dadurch gekennzeichnet, dass** die Distanzelemente (7, 29, 35) durch das axiale Verspannen mit den Felgen (6, 36) in radialer Richtung gegen den Tragkörper (2) verspannt sind.

24. Bodenwalze nach Anspruch 23, **dadurch gekennzeichnet, dass** die Distanzelemente (7, 29, 35) keilförmig unter die Felgen (6, 36) schiebbar sind.

25. Bodenwalze nach einem oder mehreren der vorstehenden Ansprüche, **dadurch gekennzeichnet, dass** die Distanzelemente (7, 29, 35) an ihren äußeren den Felgen (6, 36) und/oder Tragkörper (2) zugewandten Enden mehrere in axialer Richtung weisende Schlitze (33) aufweisen.

26. Bodenwalze nach einem oder mehreren der vorstehenden Ansprüche, **dadurch gekennzeichnet, dass** der Hohlraum des Tragkörpers (2) zumindest teilweise mit einem die Walze ballastierenden Material befüllbar ist.

27. Bodenwalze nach einem oder mehreren der vorstehenden Ansprüche, **dadurch gekennzeichnet, dass** in dem Hohlraum des Tragkörpers (2) zumindest ein Bremselement angeordnet ist.

28. Bodenwalze nach einem oder mehreren der vorstehenden Ansprüche, **dadurch gekennzeichnet, dass** das Distanzelement (7, 29, 35) in dem Bereich zwischen zwei benachbarten Gummihohlreifen (5) einen größeren Durchmesser als den Felgendurchmesser und kleineren Durchmesser als den Reifendurchmesser aufweist.

29. Bodenwalze nach Anspruch 28, **dadurch gekennzeichnet, dass** der Durchmesser des Distanzelementes (7, 29, 35) in dem Bereich zwischen zwei benachbarten Gummihohlreifen (5) um den Betrag zwischen einem viertel und der Hälfte, der Differenz der Durchmesser von Reifen- und Felgendurchmesser größer ist als der Felgendurchmesser oder kleiner ist als der Reifendurchmesser.
